# EUROPEAN PATENT SPECIFICATION

(11) **EP 0 531 672 B1**
(45) Date of publication and mention of the grant of the patent: **27.12.1995**
(21) Application number: 92112335.2
(22) Date of filing: 20.07.1992
(51) Int. Cl.: B23K 11/06

(54) **Disk welding machine**
Scheibenschweissmaschine
Appareil de soudage à disques

(30) Priority: 29.07.1991 IT PD910133
(43) Date of publication of application: 17.03.1993
(73) Proprietor: LEAS S.r.l., I-35010 S. Giorgio in Bosco (Padova) (IT)
(72) Inventor: Rossi, Fernando, I-35010 S. Giorgio in Bosco (Padova) (IT)
(74) Representative: Modiano, Guido, Dr.-Ing.

(56) References cited:
- DE-A- 947 008
- US-A- 2 310 557
- US-A- 3 119 005

## Description

The present invention relates to a disk welding machine.

Disk welding machines are currently used to couple by welding for example the elements for forming the radiating panels of heating systems; said machines have, in their constructive type, a supporting frame which extends substantially vertically, is shaped like a portal and supports, on at least one of its faces, a pair of disk-shaped electrodes which are arranged opposite to the mating plane of the elements to be welded.

The supporting frame can conveniently slide on guides which allow it to move parallel to said mating plane of the elements to be welded and is connected with means for actuating said movement.

This configuration of the machine creates many problems, both from the economic point of view and from the point of view of manufacture, which are mainly due to the fact that it is necessary to move a portal which, in order to be able to withstand the stresses which occur during welding, is rather sturdy and heavy.

Furthermore, if said portal of the welding machine supports two pairs of electrodes in order to simultaneously perform two welding operations, other problems arise due to the fact that the movements of the two pairs of electrodes are not independent.

During use, both pairs of electrodes must therefore have completed their welding operation in order to begin a new cycle.

Known from US-A-3,119,005 is a welding machine comprising a fixed supporting frame, guides connected to said frame and extending parallel to a working plane whereon elements to be welded together are arranged so as to mate, slider means slideable on said guides, disk electrodes supported by said slider means and lying co-planar and mutually opposite with respect to said working plane, and means for moving said slider means along said guides in a direction parallel to said working plane.

Also known from US-A-2,310,557 is an electric welding machine having a work support, wheels for guiding the carriage along the work support and a a pair of toggle links connecting the electrode holder to the carriage and movable into alignment with the electrode holder to establish a work-engaging position of the electrode. A lever is pivoted on the carriage in such a manner as to actuate the toggle links to maintain a work-engaging position of the electrode during a predetermined portion of the carriage ravel.

The aim of the present invention is to provide a disk welding machine whose structure allows to eliminate the problems which currently affect known machines.

A consequent primary object is to provide a disk welding machine which allows to reduce the costs related in particular to the means for moving the various parts in order to perform welding.

Another important object is to provide a machine which allows to independently perform two welding operations, each one between separate pairs of elements.

Not least object is to provide a machine which is simple and sturdy.

This aim, these objects and others which will become apparent hereinafter are achieved by a disk welding machine as defined in claim 1. Dependent claims 2-6 define further embodiments of the invention.

Further characteristics and advantages of the present invention will become apparent from the detailed description of an embodiment thereof, illustrated only by way of non-limitative example in the accompanying drawings, wherein:
figure 1 is a schematic front elevation view of the welding machine according to the invention;
figure 2 is a schematic top view of the machine of figure 1.

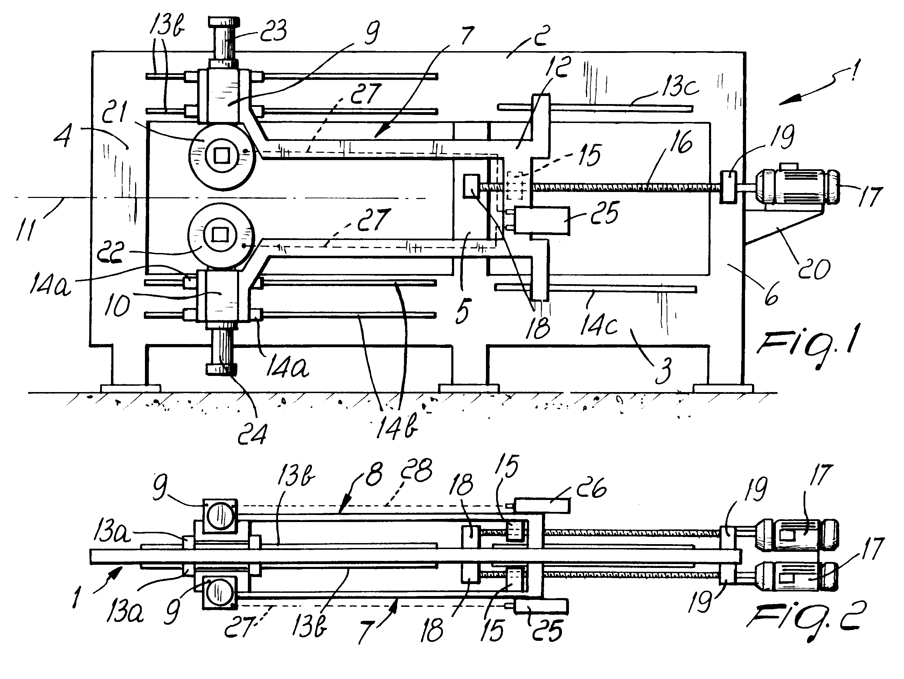

With reference to the above figures, the disk welding machine comprises a sturdy fixed supporting frame, designated by the reference numeral 1, which is conveniently shaped like a vertical portal composed of two horizontal members, respectively 2 and 3, connected by three vertical columns, respectively 4, 5 and 6.

Respective sliders 7 and 8 are provided in opposite positions with respect to the frame 1, in particular at the faces of the portal defined thereby, and are coupled thereto so that they can slide.

Each slider 7 or 8 comprises two trucks, respectively 9 and 10, which are arranged mutually opposite with respect to an ideal working plane, designated by 11, at which the elements to be welded are arranged so as to mate, and of a structure 12 which is shaped like an elongated C, which rigidly connects the two trucks 9 and 10, and which extends parallel to the plane 11.

Each truck 9 and 10 can slide, by means of sliding blocks 13a and 14a, on pairs of tempered guides, respectively 13b and 14b; one pair is arranged on the upper member 2 and the other one is arranged on the lower member 3.

The structure 12 can also slide on guides, respectively 13c and 14c; one guide is arranged on the upper member 2 and the other one is arranged on the lower member 3.

A ball-bearing nut 15 is rigidly coupled to the structure 12, at the opposite end with respect to the trucks 9 and 10; a ball-screw 16 engages said nut and is associated with a motor 17 for rotating it.

The ball-screw 16 is conveniently supported, at its ends, between two supports, respectively 18 and 19, which are fixed to the columns 5 and 6 of the frame 1, while the motor 17 is arranged on a base 20 which is fixed to the column 6.

Each truck 9 and 10 supports a corresponding disk-shaped electrode, respectively 21 and 22, which is associated with a pneumatic piston, respectively 23 and 24, which allows it to move at right angles to the plane 11, producing a required welding pressure.

Each slider 7 and 8 has a welding transformer, respectively 25 and 26, mounted thereon; said transformer supplies current to the respective pair of electrodes (in the case of the slider 7, to the electrodes 21 and 22) by means of copper connections 27 and 28.

Naturally, the transformer follows the trucks during their movements.

As regards the operation of the machine, the two pairs of electrodes 21 and 22, which are supported by independent sliders 7 and 8 and are electrically supplied, are positioned so as to compress pairs of elements to be welded together, for example the elements suitable to produce radiating panels, by moving from one end to the other of the pairs of guides 13 and 14.

The movement of the electrodes in this machine does not entail the movement of large masses, and therefore low-power motors and less sturdy mechanisms than those currently necessary are used.

The forces applied during welding are in any case discharged onto the frame 1 by the trucks 9 and 10 through the couplings between the guides and the sliding blocks.

In practice it has thus been observed that the above described machine has achieved the intended aim and objects of the present invention.

The machine thus conceived is susceptible to numerous modifications and variations within the scope of the appended claims.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Welding machine comprising a fixed supporting frame (1-6);
two separate guide means (13b,14b) connected to said frame and extending parallel to a working plane (11) whereon elements to be welded together are arranged so as to mate, the projection of the first guide means onto said working plane being laterally spaced from the projection of the second guide means;
two sliders (7,8), each slider being supported on one of said guide means;
disk electrodes (21, 22), whereby each slider supports a pair of disk electrodes which lie co-planar and mutually opposite with respect to said working plane;
means for moving said sliders along said guides in a direction parallel to said working plane, said means for moving comprising two separate actuation means (17) and two transmission means (16) for each slider, each transmission means independently connecting each actuation means to the respective slider.

2. Welding machine according to claim 1, characterized in that it further comprises means (21, 22) for moving said disk electrodes (21, 22) in a direction perpendicular to said working plane (11) for compressing therebetween elements to be welded together.

3. Welding machine according to claim 2, characterized in that said means (21, 22) for moving said disk electrodes (21, 22) in a direction perpendicular to said working plane (11) comprise two pneumatic pistons (23, 24) mounted on each of said sliders (7, 8) and movably supporting one of said two pairs of disk electrodes (21, 22).

4. Welding machine according to claim 3, characterized in that said two pneumatic pistons (23, 24) mounted on each of said sliders (7, 8) are arranged coaxially and symmetrical with respect to said working plane (11).

5. Welding machine according to claim 1, characterized in that said two separate actuation means (17) comprise two motors (17) fixed to said frame (1-6), and in that said two transmission means (16) comprise two ball screws (16) each extending between two supports (18, 19) connected to said frame (1-6), each ball screw (16) independently connecting one of said motors (17) to one of said sliders (7, 8).

6. Welding machine according to claim 3, characterized in that it further comprises two trucks (9, 10) connected to each of said sliders (7, 8), and blocks (13a, 14a) connected to said trucks (9, 10), said blocks being slideable on said guides (13b, 13c, 14b, 14c), and each supporting one of said pneumatic pistons (23, 24).

## Patentansprüche

1. Schweißmaschine, umfassend:
einen festen Stützrahmen (1-6),
zwei separate Führungsvorrichtungen (13b,14b), die mit dem Rahmen verbunden sind und sich parallel zu einer Arbeitsebene (11) erstrecken, auf welcher zwei miteinander zu verschweißende Teile zusammenpassend angeordnet sind, wobei die Projektion der ersten Führungsvorrichtung auf die Arbeitsebene von der Projektion der zweiten Führungsvorrichtung auf die Arbeitsebene seitlich beabstandet ist,
zwei Schieber (7,8), deren jeder an einer der Führungsvorrichtungen gelagert ist,
Scheibenelektroden (21,22), wobei jeder Schieber ein Paar dieser Scheibenelektroden hält, die in bezug auf die Arbeitsebene koplanar und einander gegenüberliegend angeordnet sind, und
Mittel zur Bewegung der Schieber entlang der Führungen in einer zur Arbeitsebene parallelen Richtung, wobei diese Bewegungsmittel für jeden Schieber zwei getrennte Betätigungseinrichtungen (17) und zwei Übertragungseinrichtungen (16) umfassen und jede Übertragungseinrichtung jede Betätigungseinrichtung eigenständig mit dem betreffenden Schieber verbindet.

2. Schweißmaschine nach Anspruch 1, dadurch gekennzeichnet, daß diese ferner Mittel zur Bewegung der Scheibenelektroden (21,22) in einer zur Arbeitsebene (11) senkrechten Richtung umfaßt, um miteinander zu verschweißende Teile zwischen den Elektroden aneinanderzudrücken.

3. Schweißmaschine nach Anspruch 3, dadurch gekennzeichnet, daß die Mittel zum Bewegen der Scheibenelektroden (21,22) in einer zur Arbeitsebene (11) senkrechten Richtung zwei jeweils an einem der Schieber (7,8) montierte Druckluftkolben (23,24) umfassen, an welchen eine Elektrode des Elektrodenpaares (21,22) beweglich gelagert ist.

4. Schweißmaschine nach Anspruch 3, dadurch gekennzeichnet, daß die beiden an jedem der Schieber (7,8) montierten Druckluftkolben (23,24) in bezug auf die Arbeitsebene (11) koaxial und symmetrisch angeordnet sind.

5. Schweißmaschine nach Anspruch 1, dadurch gekennzeichnet, daß die beiden voneinander getrennten Betätigungseinrichtungen (17) zwei an dem Rahmen (1-6) befestigte Motoren (17) sind und daß die beiden Übertragungseinrichtungen (16) zwei Kugelumlaufspindeln (16) sind, deren jede sich zwischen zwei mit dem Rahmen (1-6) verbundenen Halterungen (18,19) erstreckt, wobei jede Kugelumlaufspindel (16) einen der Motoren (17) unabhängig von dem jeweils anderen mit einem der Schieber (7,8) verbindet.

6. Schweißmaschine nach Anspruch 3, dadurch gekennzeichnet, daß diese ferner zwei jeweils mit einem der Schieber (7,8) verbundene Gestelle (9,10) und mit den Gestellen (9,10) verbundene Blöcke (13a,14a) umfaßt, die an den Führungen (13b,13c,14b,14c) verschiebbar sind und jeweils einen der Druckluftkolben (23,24) tragen.

## Revendications

1. Machine de soudage comprenant :
- un bâti de support fixe (1-6) ;
- deux moyens de guidage séparés (13b,14b) reliés audit bâti et s'étendant parallèlement à un plan de travail (11) sur lequel des éléments à souder ensemble sont agencés de façon à s'ajuster, la projection du premier moyen de guidage sur ledit plan de travail étant latéralement espacée de la projection du second moyen de guidage ;
- deux coulisseaux (7,8), chaque coulisseau étant supporté sur un desdits moyens de guidage ;
- des électrodes à disque (21,22), grâce à quoi chaque coulisseau support une paire d'électrodes à disque qui sont coplanaires et mutuellement opposées par rapport audit plan de travail ;
- des moyens pour déplacer lesdits coulisseaux le long desdits guides dans une direction parallèle audit plan de travail, lesdits moyens de déplacement comprenant deux moyen d'actionnement séparés (17) et deux moyens de transmission (16) pour chaque coulisseau, chaque moyen de transmission reliant indépendamment chaque moyen d'actionnement au coulisseau respectif.

2. Machine de soudage selon la revendication 1,
caractérisée en ce qu'elle comprend de plus des moyens (21,22) pour déplacer lesdites électrodes à disque (21,22) dans une direction perpendiculaire audit plan de travail (11) pour comprimer entre elles des éléments à souder ensemble.

3. Machine de soudage selon la revendication 2,
caractérisée en ce que lesdits moyens (21,22) pour déplacer lesdites électrodes à disque (21,22) dans une direction perpendiculaire audit plan de travail (11) comprennent deux pistons pneumatiques (23,24) montés sur chacun desdits coulisseaux (7,8) et supportant de façon mobile une desdites deux paires d'électrodes à disque (21,22).

4. Machine de soudage selon la revendication 3,
caractérisée en ce que lesdits deux pistons pneumatiques (23,24) montés sur chacun desdits coulisseaux (7,8) sont agencés coaxialement et symétriquement par rapport audit plan de travail (11).

5. Machine de soudage selon la revendication 1,
caractérisée en ce que lesdits deux moyens d'actionnement séparés (17) comprennent deux moteurs (17) fixés audit bâti (1-6), et en ce que lesdits deux moyens de transmission (16) comprennent deux vis à billes (16) chacune s'étendant entre deux supports (18,19) reliés audit bâti (1-6), chaque vis à billes (16) reliant indépendamment un desdits moteurs (17) à un desdits coulisseaux (7,8).

6. Machine de soudage selon la revendication 3,
caractérisée en ce qu'elle comprend de plus deux chariots (9,10) reliés à chacun desdits coulisseaux (7,8), et des blocs (13a,14a) reliés auxdits chariots (9,10), lesdits blocs pouvant coulisser sur lesdits guides (13b,13c,14b, 14c), et supportant chacun un desdits pistons pneumatiques (23,24).
